# EUROPEAN PATENT SPECIFICATION

(11) **EP 2 578 630 B1**
(45) Date of publication and mention of the grant of the patent: **01.08.2018**
(21) Application number: 11789243.0
(22) Date of filing: 03.06.2011
(51) Int. Cl.: C08L 63/00, C08L 63/02, C08L 63/08

(54) **EPOXY RESIN COMPOSITION AND ITS PREPARING METHOD**
EPOXIDHARZZUSAMMENSETZUNG UND HERSTELLUNGSVERFAHREN DAFÜR
COMPOSITION DE RÉSINE ÉPOXYDE ET SON PROCÉDÉ DE PRÉPARATION

(30) Priority: 04.06.2010 CN 201010191767
(43) Date of publication of application: 10.04.2013
(73) Proprietor: China Petroleum & Chemical Corporation, Beijing 100728 (CN); Beijing Research Institute of Chemical Industry, China Petroleum & Chemical Corporation, Chaoyang District Beijing 100013 (CN)
(72) Inventor: QI, Guicun, Beijing 100013 (CN); QIAO, Jinliang, Beijing 100013 (CN); ZHANG, Xiaohong, Beijing 100013 (CN); GAO, Jianming, Beijing 100013 (CN); SONG, Zhihai, Beijing 100013 (CN); LI, Binghai, Beijing 100013 (CN); CAI, Chuanlun, Beijing 100013 (CN); ZHANG, Hongbin, Beijing 100013 (CN); WANG, Ya, Beijing 100013 (CN); LAI, Jinmei, Beijing 100013 (CN)
(74) Representative: Hoffmann Eitle
(86) International application number: PCT/CN2011/075280
(87) International publication number: WO 2011/150864

(56) References cited:
- CN-A- 101 928 443
- JP-A- H06 248 056
- JP-A- 2008 001 807
- US-A- 3 948 849
- US-A1- 2003 088 036
- HUANG, FAN ET AL.: 'Study on epoxy resin modified by elastic nano-particles' CHINA SCIENCE B, CHEMISTRY 1001-652X vol. 34, no. 5, 2004, pages 432 - 440, XP008170875
- TRIPATHI GARIMA ET AL.: 'Effect of carboxyl-terminated poly(butadiene-co- acrylonitrile)(CTBN) concentration on thermal and mechanical properties of binary lends of diglycidyl ether ofbisphenol-A (DGEBA) epoxy resin' MATERIALS SCIENCE AND ENGINEERING A vol. 443, no. IS.1-2, 15 January 2007, pages 262 - 269, XP005775809
- J KARGER-KOCSIS ET AL.: 'Microstructure-Related Fracture Toughness And Fatigue Crack Grouth Behavior In Toughened' ANHYDRIDE-CURED EPOXY RESIN, COMPOSITES SCIENCE AND TECHNOLOGY vol. 48, 1993, pages 263 - 272, XP055124992
- TRIPATHI GARIMA ET AL.: 'Study on blends of cycloaliphatic epoxy Resin with varying concentrations of carboxyl terminated butadiene Acrylonitrile copolymer I: Thermal and morphological properties' BULLETIN OF MATERIALS SCIENCE vol. 32, no. ISS.2, April 2009, pages 199 - 204, XP055124993

## Description

### Technical Field

The invention relates to an epoxy resin. More particularly, the invention relates to an epoxy resin composition with higher heat resistance and higher toughness which is modified by nitrile rubber, and preparation thereof.

### Technology Background

Since commercialization in 1946, Epoxy resin is widely used in many fields such as mechanics, electrics, electrons, aeronautics and astronautics etc. due to its comprehensive properties such as high mechanical strength, good insulation resistance and excellent solvent resistance. However, pure epoxy resin is a brittle material, which limits its applications. While the toughness of epoxy resin can be improved by physical or chemical methods, its heat resistance often becomes poor.

In the technology of modifying the toughness of epoxy resin, the most effective and economic toughening method is to add a modifier in it. The earlier modifiers are plasticizer (phthalates and phosphates) and softening agents (polymalonic acid glycidyl ether, polymerized fatty acid polyglycidyl ether etc.). Through experimenting, it was found that these modifiers can improve the toughness of epoxy resin, but they can reduce its heat resistance significantly at same time.

In 1960's, McGarry and Willner found that carboxyl-terminated butadiene nitrile liquid rubber (CTBN) improves impact properties of epoxy resin significantly and at the same time reduce its heat resistance slightly. Later, they also developed a series of liquid rubbers with the properties similar to CTBN, but the modified properties that these liquid rubbers impart to epoxy resin are poorer than those properties that CTBN do. At present, taking CTBN as a modifier of epoxy resin is an important method for toughening the epoxy resin.

China patent ZL 01136381.9 filed by Beijing Research Institute of Chemical Industry of China Petroleum & Chemical Corporation disclosed a toughening thermosetting resin and its preparation method. Such method can not only prepare thermosetting resin with high toughness but also keep its heat resistance, even improve its heat resistance slightly.

In summary, in the technology of improving the toughness of epoxy resin, the method that is to disperse the rubber in the epoxy resin by mechanical blending is the simplest, most economic and more effective method. Since rubber phase is a soft phase in the epoxy resin, while the object of toughening the rubber is achieved, its heat resistance cannot be improved usually, even becomes poor. This particularity limits the applications of epoxy resin in the fields which require high heat resistance, such as circuit board, electronics packaging, binder and electrical insulating coating etc..

### Invention summary

In research the inventors found that in the epoxy resin system using anhydride curing agent, the powdery nitrile rubber can replace curing accelerator when it is used to modify epoxy resin as a modifier. At the same time the toughness of epoxy resin can be improved significantly, and its heat resistance can also increase largely. Accordingly the problem is overcome that rubber can't significantly improve the heat resistance of epoxy resin while toughening it.

Therefore, the object of the invention is to provide an epoxy resin composition which has both higher heat resistance and higher toughness.

Another object of the invention is to provide a method of preparing such epoxy resin composition.

The epoxy resin composition of the invention comprises the following blended components: 100 weight parts of epoxy resin; 30 to 120 weight parts, preferably 50 to 90 weight parts of anhydride curing agent; 1 to 45 weight parts, preferably 2 to 29 weight parts, more preferably 3 to 25 weight parts, most preferably 3 to 19 weight parts of powdery nitrile rubber; and no curing accelerator is included in the composition.

The method of preparing the epoxy resin composition of the present invention comprises the steps of mixing the powdery nitrile rubber and epoxy resin prepolymer uniformly in the weight ratio above, and adding other additive agent comprising anhydride curing agent without adding curing accelerator, and then curing to obtain the epoxy resin composition.

The epoxy resin in the composition of the invention includes all epoxy resin disclosed in the art. In general, the epoxy resin broadly mean high molecular prepolymer containing two or more epoxy groups based on aliphatic, alicyclic or aromatic skeleton. The epoxy resins usually can be divided into the following classes: glycidyl ether type epoxy resin, glycidyl ester type epoxy resin, glycidyl amine type epoxy resin, alicyclic epoxy resin and epoxidized olefinic epoxy resin etc..

Preferably, glycidyl ether type epoxy resin include bisphenol A diglycidyl ether, bisphenol F diglycidyl ether, fatty alcohol polyglycidyl ether etc.; Preferably, glycidyl ester type epoxy resin include phthalic diglycidyl ester, isophthalic diglycidyl ester, p-phthalic diglycidyl ester, dimer acid diglycidyl ester etc.; Preferably, glycidyl amine type epoxy resin include N,N-Diglycidyl-4-glycidyloxyaniline, triglycidyl cyanurate etc.; Preferably, alicyclic epoxy resin include dicyclopentadiene dioxide, α-dicyclopentadiene dioxide ether, β-dicyclopentadiene dioxide ether, dicyclopentadiene dioxide ethylene glycol ether etc.; Preferably, epoxidized olefinic epoxy resin include polybutadiene epoxide etc..

Preferably, among the epoxy resin composition according to the invention, the epoxy resin are at least one selected from the group consisting of glycidyl ether type epoxy resin, glycidyl ester type epoxy resin, alicyclic epoxy resin and epoxidized olefinic epoxy resin.

The curing agent in the composition according to the invention are anhydride curing system and typically can be at least one selected from the group consisting of phthalic anhydride, tetrahydrophthalic anhydride, hexahydrophthalic anhydride, methyl tetrahydrophthalic anhydride, methyl hexahydrophthalic anhydride, methyl nadic anhydride, dodecylsuccinic anhydride, chlorendic anhydride, pyromellitic anhydride, benzophenone tetracarboxylic acid dianhydride, methyl cyclohexene tetracarboxylic acid dianhydride, diphenyl ether tetracarboxylic acid dianhydride, trimellitic anhydride, polyazelaic polyanhydride, maleic anhydride, 70 anhydride, tung oil anhydride and 647 anhydride; preferably at least one selected from the group consisting of phthalic anhydride (PA), methyl tetrahydrophthalic anhydride (MeTHPA), methyl hexahydrophthalic anhydride, pyromellitic anhydride and trimellitic anhydride. The amount of anhydride curing agent is 30 to 120 weight parts, preferably 50 to 90 weight parts based on 100 weight parts of epoxy resin.

In the epoxy resin composition according to the invention, the powdery nitrile rubber are rubble particle having homogeneous phase structure, and the gel content of rubber particles is 60wt% or greater, preferably 75wt% or greater, more preferably 85wt% or greater; the mean particle diameter of rubber particles is 20 to 500 nm, preferably 50 to 200 nm, more preferably 70 to 150 nm.

The powdery nitrile rubber can be full vulcanized powdery nitrile rubber prepared according to China patent ZL00816450.9 filed by the present applicant on September 18, 2000 (which claims the priority of China patent application No. 99125530.5 filed on December 03, 1999, and the corresponding international application publication number is WO2001/040356). Such full vulcanized powdery nitrile rubber is obtained by irradiating and crosslinking nitrile rubber emulsion to fix the particle diameter of nitrile rubber latex particles. The mean particle diameter is usually 20 to 2000 nm, preferably 30 to 1500 nm, more preferably 50 to 500 nm. The rubble particles have homogeneous phase structure, and the gel content of rubber particles is 60wt% or greater, preferably 75wt% or greater, more preferably 90wt% or greater.

The powdery nitrile rubber can also be crosslinked powdery nitrile rubber prepared according to China patent ZL00130386.4 filed by the present applicants on November 03, 2000. According to this patent, some rubber latexes undergo a certain degree of cross-linking between the rubber molecules, which results in rubber latexes having a certain degree of cross-linking. Such rubber latexes are referred to as cross-linked rubber latexes. Wherein the crosslinked powdery nitrile rubber is a powdery rubber obtained by drying said crosslinked nitrile rubber latex. The mean particle diameter of crosslinked powdery nitrile rubber is usually 50 to 300 nm and the gel content of rubber particles is 80wt% or greater, preferably 85wt% or greater. Each particle of the crosslinked powdery nitrile rubber is homogeneous.

The powdery nitrile rubber can also be a mixture of the full vulcanized powdery nitrile rubber and crosslinked powdery nitrile rubber.

The amount of powdery nitrile rubber is 1 to 45 weight parts, preferably 2 to 29 weight parts, more preferably 3-25 weight parts, most preferably 3 to 19 weight parts based on 100 weight parts of epoxy resin.

The nitrile groups in the powdery nitrile rubber of the composition according to the invention can accelerate the curing of epoxy resin and has the effect of curing accelerator. Moreover, since the powdery nitrile rubber have very small particle diameter and can be dispersed into the epoxy resin easily, cure accelerating effect of the nitrile groups in the powdery nitrile rubber is magnified. Accordingly it can completely replace the effect of curing accelerator. Therefore, no curing accelerator is needed in the composition according to the invention. The curing reaction of epoxy resin starts from the surface of rubber particles of the powdery nitrile rubber such that the crosslinking density of epoxy resin on the surface of rubber particles is higher. So higher heat resistances interface layer forms between the epoxy resin and rubber. Thus the resulting modified epoxy resin not only remains its high toughness and has significantly increased heat resistance compared to the composition with adding curing accelerator.

In the method of preparing the composition of the invention, the powdery nitrile rubber and epoxy resin prepolymer is mixed in the one of the following ways: a) one-step mixing method of mixing the powdery nitrile rubbers and epoxy resin prepolymer directly in the ratio; b) two-step mixing method of premixing the powdery nitrile rubbers and a part of epoxy resin prepolymer in the weight ratio of (1-100):100 to prepare a premix and then mixing the premix and the remaining epoxy resin prepolymer. In the premix, the weight ratio of the powdery nitrile rubber and epoxy resin prepolymer is preferably (5-50):100, more preferably (5-30):100. Despite one-step mixing method or two-step mixing method, the weight ratio of the total weight of powdery nitrile rubber and the total weight of epoxy resin prepolymer in the mixture shall be (1-45):100, preferably (2-29):100, more preferably (3-25):100, most preferably (3-19):100. In the mixing method b), additive agents containing anhydride curing agents can be added during the premixing and can also be added during the second mixing step.

In the preparation of the composition of the invention, the mixing, curing (or crosslinking) conditions (including temperature, time etc.) of epoxy resin and the used equipments are mixing, curing (or crosslinking) conditions and equipments used in the conventional processing of epoxy resin. For example, the mixing is carried out by using conventional devices such as tri-roller mill conical mill, mixer, kneader, single screw extruder, twin-screw extruder, mixing roll or internal mixer etc., and the mixing can be carried out at constant temperature.

Moreover, suitable amount of other conventional aids for processing epoxy resin can be added according to the requirement, such as diluter, filler, etc. and its use amount is a conventional amount. Since the viscosity of epoxy resin is higher, suitable amount of common active or non-active diluters can be added during use such that common aids and modifiers (such as rubbers etc.) can be added in higher parts. When the powdery nitrile rubber and epoxy resin prepolymer is mixed with the rubber being higher parts, common diluters can be added in the preparation method according to the invention to help the dispersing of powdery nitrile rubber in the epoxy resin. The powdery nitrile rubber has an effect of curing accelerator on epoxy resin, and thus no curing is needed to be added into the system.

After a large of tests and studying, the inventors found that the nitrile grouping in the powdery nitrile rubber can replace the curing accelerator and accelerate the curing of epoxy resin. Moreover, since the powdery nitrile rubber is dispersed into the epoxy resin in a very small particle diameter, the cure accelerating effect is magnified such that curing accelerator is replaced. Moreover, since the crosslinking density of epoxy resin on the surface of rubber becomes higher due to the cure accelerating effect, higher hardness interface layer forms between the epoxy resin and rubber. Hard interface imparts high heat resistance to the system, and soft rubber phase imparts high toughness to the system. The epoxy resin composition according to the invention is especially suitable for the fields which require high heat resistance, such as circuit board, electronics packaging, binder and electrical insulating coating etc.. The preparation method of the invention is simple in the process and low in cost.

### Description of Drawings

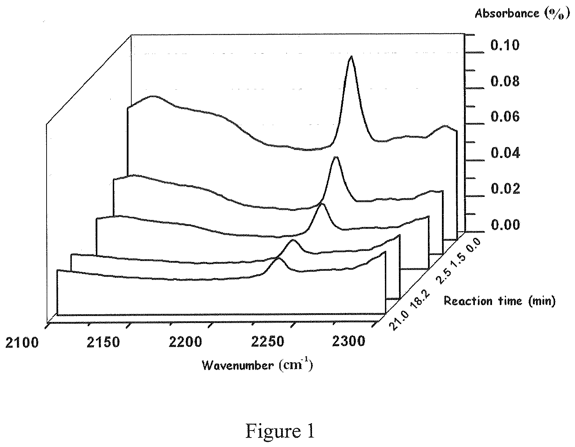

Figure 1 shows infrared spectrum in situ of the mixture of epoxy resin, curing agent (MeTHPA) and full vulcanized powdery nitrile rubber via reaction time, the test temperature is 130°C, the amount of epoxy resin is 100 weight parts, the amount of curing agent (MeTHPA) is 75 weight parts, and the amount of full vulcanized powdery nitrile rubber is 12 weight parts.

Figure 1 shows spectrum of infrared absorption peak of the nitrile grouping via curing time at 130°C in the system of epoxy resin, curing agent (MeTHPA) and full vulcanized powdery nitrile rubber. It can be seen from figure 1 that the strength of absorption peak of the nitrile grouping reduces continuously with reaction time. It is because that the nitrile grouping participates in the curing reaction. Moreover, since the full vulcanized powdery nitrile rubber is dispersed into the epoxy resin in a very small particle diameter, the cure accelerating effect of the nitrile grouping is magnified such that curing accelerator can be replaced. Its reaction mechanism is shown by the following reaction equation: 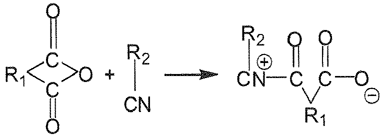 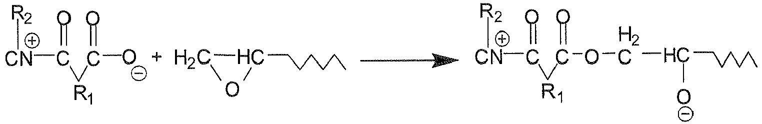 wherein
R₁ : 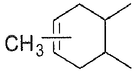
R₂ :

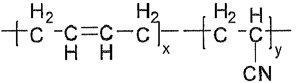

In the above formula, x and y are positive integers.

### Embodiments

The invention is further described by the following examples. However, the scopes of the invention are not limited by these examples, and the scopes of the invention depend on the enclosed claims.

### Example 1

100g of epoxy resin prepolymer (Baling Petrochemical Corporation Ltd of Sinopec Group Asset Management Ltd, CYD-128) and 25g of full vulcanized powdery nitrile rubber (Beijing Research Institute of Chemical Industry, VP401, gel content of 91%, mean particle diameter of 100nm) are mixed and grinded three times using tri-roller grinder to prepare the mixture of epoxy resin prepolymer and full vulcanized powdery nitrile rubber. Then the grinded mixture and 75g of curing agent methyl tetrahydrophthalic anhydride (GUANGDONG SUNSTAR TRADING CO., LTD) are placed into three mouth flask and stirred at 90°C and vacuumized for 30 min, and then the mixture is injected into polytetrafluoroethene mold which has been preheated to 110°C and pre-cured for 2 hours at 110°C. Then the temperature is enhanced to 130°C for curing 12 hours to obtain the cured products. After cutting by milling machine, various properties are measured. The test results are shown in Table 1.

### Example 2

25g of full vulcanized powdery nitrile rubber are replaced by 20g of full vulcanized powdery nitrile rubber, and the remaining conditions are same as those in Example 1.

### Example 3

25g of full vulcanized powdery nitrile rubber are replaced by 12g of full vulcanized powdery nitrile rubber, and the remaining conditions are same as those in Example 1.

### Example 4

25g of full vulcanized powdery nitrile rubber are replaced by 6g of full vulcanized powdery nitrile rubber, and the remaining conditions are same as those in Example 1.

### Example 5

25g of full vulcanized powdery nitrile rubber are replaced by 3g of full vulcanized powdery nitrile rubber, and the remaining conditions are same as those in Example 1.

### Example 6

The curing agent is methyl hexahydrophthalic anhydride (Huicheng Chemistry Industry), and the remaining conditions are same as those in Example 3.

### Comparative example 1

100g of epoxy resin prepolymer (which is same as Example 1) and 25g of full vulcanized powdery nitrile rubber (which is same as Example 1) are mixed and grinded three times using tri-roller grinder to prepare the mixture of epoxy resin prepolymer and full vulcanized powdery nitrile rubber. Then the grinded mixture and 75g of curing agent methyl tetrahydrophthalic anhydride (which is same as Example 1) are placed into three mouth flask and stirred at 90°C and vacuumized for 30 min, and then 1.5g of curing accelerator triethanolamine (Tianjin Chemical Reagent No.1 Factory) and stirred and vacuumized for 5 min. Then, the mixture is injected into polytetrafluoroethene mold which has been preheated to 110°C and pre-cured for 2 hours at 110°C. Then the temperature is enhanced to 130°C for curing 12 hours to obtain the cured products. After cutting by milling machine, various properties are measured. The test results are shown in Table 1.

### Comparative example 2

25g of full vulcanized powdery nitrile rubber are replaced by 20g of full vulcanized powdery nitrile rubber, and the remaining conditions are same as those in Comparative example 1.

### Comparative example 3

25g of full vulcanized powdery nitrile rubber are replaced by 12g of full vulcanized powdery nitrile rubber, and the remaining conditions are same as those in Comparative example 1.

### Comparative example 4

25g of full vulcanized powdery nitrile rubber are replaced by 6g of full vulcanized powdery nitrile rubber, and the remaining conditions are same as those in Comparative example 1.

### Comparative example 5

25g of full vulcanized powdery nitrile rubber are replaced by 3g of full vulcanized powdery nitrile rubber, and the remaining conditions are same as those in Comparative example 1.

### Comparative example 6

The curing agent is methyl hexahydrophthalic anhydride (which is same as Example 6), and the remaining conditions are same as those in Comparative example 3.

### Comparative example 7

100g of epoxy resin prepolymer (which is same as Example 1) and 75g of curing agent methyl tetrahydrophthalic anhydride (which is same as Example 1) are placed into three mouth flask and stirred at 90°C and vacuumized for 30 min, and then 1.5g of curing accelerator triethanolamine (which is same as Comparative example 1) and stirred and vacuumized for 5 min. Then, the mixture is injected into polytetrafluoroethene mold which has been preheated to 110°C and pre-cured for 2 hours at 110°C. Then the temperature is enhanced to 130°C for curing 12 hours to obtain the cured products. After cutting by milling machine, various properties are measured. The test results are shown in Table 1.

**Table 1**

| | Impact strength (KJ/m²) | Glass transition temperature (°C) | Heat deflection temperature (°C) |
|---|---|---|---|
| Example 1 | 15 | 117.6 | 114 |
| Example 2 | 14 | 125.1 | 120 |
| Example 3 | 16 | 138.0 | 132 |
| Example 4 | 13 | 122.2 | 118 |
| Example 5 | 16 | 119.4 | 115 |
| Example 6 | 22 | 141.0 | 138 |
| Comparative example 1 | 17 | 106.4 | 101 |
| Comparative example 2 | 17 | 114.4 | 111 |
| Comparative example 3 | 16 | 111.1 | 97 |
| Comparative example 4 | 17 | 115.1 | 99 |
| Comparative example 5 | 15 | 108.2 | 104 |
| Comparative example 6 | 16 | 119.0 | 113 |
| Comparative example 7 | 9 | 108.7 | 94 |
| measurement method | GB/T1843-2008 | GB/T19466.2-2004 | GB/T1634.2-2004 |

Comparing the data in table 1, it can be seen that the impact strength of the composition according to the invention without adding curing accelerator changes little and the glass transition temperature and heat deflection temperature increase significantly compared to the composition with adding curing accelerator. This indicates that the composition of the invention without adding curing accelerator has not only high toughness but also high heat resistance. While without adding powdery nitrile rubber (e.x. comparative example 7), the composition has lower impact strength, glass transition temperature and heat deflection temperature. It shows that the powdery nitrile rubber have the effect of enhancing both the toughness and heat resistance in the composition of the invention.

## Claims

1. An epoxy resin composition comprising the following blended components: 100 weight parts of epoxy resin; 30 to 120 weight parts, preferably 50 to 90 weight parts of anhydride curing agent; 1 to 45 weight parts, preferably 2 to 29 weight parts, more preferably 3 to 25 weight parts, most preferably 3 to 19 weight parts of powdery nitrile rubber;
no curing accelerator is included in the composition;
wherein the powdery nitrile rubber are rubber particles having homogeneous structure, mean particle diameter of 20 to 500 nm and gel content of 60wt% or greater.

2. The epoxy resin composition according to claim 1, wherein the anhydride curing agent are at least one selected from the group consisting of phthalic anhydride, tetrahydrophthalic anhydride, hexahydrophthalic anhydride, methyl tetrahydrophthalic anhydride, methyl hexahydrophthalic anhydride, methyl nadic anhydride, dodecylsuccinic anhydride, chlorendic anhydride, pyromellitic anhydride, benzophenone tetracarboxylic acid dianhydride, methyl cyclohexene tetracarboxylic acid dianhydride, diphenyl ether tetracarboxylic acid dianhydride, trimellitic anhydride, polyazelaic polyanhydride, maleic anhydride, 70 anhydride, tung oil anhydride and 647 anhydride; preferably at least one selected from the group consisting of phthalic anhydride, methyl tetrahydrophthalic anhydride, methyl hexahydrophthalic anhydride, pyromellitic anhydride and trimellitic anhydride.

3. The epoxy resin composition according to claim 1, wherein the powdery nitrile rubber have mean particle diameter of 50 to 200 nm, preferably 70 to 150 nm.

4. The epoxy resin composition according to claim 1, wherein the powdery nitrile rubber have gel content of 75wt% or greater, preferably 85wt% or greater.

5. The epoxy resin composition according to claim 1, wherein the powdery nitrile rubbers are full vulcanized powdery nitrile rubbers and/or cross-linked powdery nitrile rubbers.

6. The epoxy resin composition according to any one of claims 1 to 5, wherein the epoxy resin are at least one selected from the group consisting of glycidyl ether type epoxy resin, glycidyl ester type epoxy resin, alicyclic epoxy resin and epoxidized olefinic epoxy resin.

7. A method for preparing the epoxy resin composition according to any one of claims 1 to 6 which comprises the steps of mixing the powdery nitrile rubbers and epoxy resin prepolymer uniformly in the weight ratio, and adding aids comprising anhydride curing agents without adding curing accelerator, and then curing to obtain the epoxy resin composition.

8. The method according to claim 7, wherein the powdery nitrile rubbers and epoxy resin prepolymer are mixed by one of the following two ways: a) one-step mixing method of mixing the powdery nitrile rubbers and epoxy resin prepolymer directly in the ratio; b) two-step mixing method of premixing the powdery nitrile rubbers and a part of epoxy resin prepolymer in the weight ratio of (1-100):100, preferably (5-50): 100, more preferably (5-30): 100 to prepare a premix and then mixing the premix and the remaining epoxy resin prepolymer.

## Patentansprüche

1. Epoxyharzzusammensetzung, enthaltend die folgenden gemischten Komponenten: 100 Gew.-Teile Epoxyharz, 30 bis 120 Gew.-Teile, bevorzugt 50 bis 90 Gew.-Teile eines Anhydrid-Härtungsmittels, 1 bis 45 Gew.-Teile, bevorzugt 2 bis 29 Gew.-Teile, mehr bevorzugt 3 bis 25 Gew.-Teile, am meisten bevorzugt 2 bis 19 Gew.-Teile pulverförmiger Nitrilkautschuk,
wobei kein Härtungsbeschleuniger in der Zusammensetzung enthalten ist,
worin der pulverförmige Nitrilkautschuk Kautschukteilchen mit einer homogenen Struktur, einem mittleren Teilchendurchmesser von 20 bis 500 nm und einem Gelgehalt von 60 Gew.% oder mehr darstellt.

2. Epoxyharzzusammensetzung gemäß Anspruch 1 , worin das Anhydrid-Härtungsmittel zumindest eines ist, ausgewählt aus der Gruppe, bestehend aus Phthalsäureanhydrid, Tetrahydrophthalsäureanhydrid, Hexahydrophthalsäureanhydrid, Methyltetrahydrophthalsäureanhydrid, Methylhexahydrophthalsäureanhydrid, Methylnadinsäureanhydrid, Dodecylsuccinsäureanhydrid, Chlorendisäureanhydrid, Pyromellitsäureanhydrid, Benzophenontetracarbonsäuredianhydrid, Methylcyclohexentetracarbonsäuredianhydrid, Diphenylethertetracarbonsäuredianhydrid, Trimellitsäureanhydrid, Polyazelainsäurepolyanhydrid, Maleinsäureanhryid, 70-Anhydrid, Tungölanhydrid und 647-Anhydrid; bevorzugt zumindest eines, ausgewählt aus der Gruppe, bestehend aus Phthalsäureanhydrid, Methyltetrahydrophthalsäureanhydrid, Methylhexahydrophthalsäureanhydrid, Pyromellitsäureanhydrid und Trimellitsäureanhydrid.

3. Epoxyharzzusammensetzung gemäß Anspruch 1, worin der pulverförmige Nitrilkautschuk einen mittleren Teilchendurchmesser von 50 bis 200 nm, bevorzugt 70 bis 150 nm hat.

4. Epoxyharzzusammensetzung gemäß Anspruch 1, worin der pulverförmige Nitrilkautschuk einen Gelgehalt von 75 Gew.% oder mehr, bevorzugt 85 Gew.% oder mehr hat.

5. Epoxyharzzusammensetzung gemäß Anspruch 1, worin die pulverförmigen Nitrilkautschuke vollständig vulkanisierte pulverförmige Nitrilkautschuke und/oder vernetzte pulverförmige Nitrilkautschuke sind.

6. Epoxyharzzusammensetzung gemäß einem der Ansprüche 1 bis 5, worin das Epoxyharz zumindest eines ist, ausgewählt aus der Gruppe, bestehend aus Epoxyharz vom Glycidylethertyp, Glycidylestertyp, alicyclischem Epoxyharz und epoxidiertem olefinischem Epoxyharz.

7. Verfahren zur Herstellung der Epoxyharzzusammensetzung gemäß einem der Ansprüche 1 bis 6, enthaltend die Schritte des gleichmäßigen Mischens der pulverförmigen Nitrilkautschuke und des Epoxyharzpräpolymers in dem Gewichtsverhältnis und Zugabe von Hilfen, enthaltend Anhydrid-Härtungsmittel ohne Zugabe eines Härtungsbeschleunigers, und anschließendes Härten, unter Erhalt der Epoxyharzzusammensetzung.

8. Verfahren gemäß Anspruch 7, worin die pulverförmigen Nitrilkautschuke und das Epoxyharzpräpolymer auf eine der folgenden zwei Wege vermischt werden: a) Einschritt-Mischungsverfahren zum Mischen der pulverförmigen Nitrilkautschuke und des Epoxyharzpräpolymers direkt in dem Verhältnis; b) Zweischritt-Mischungsverfahren zum Vormischen der pulverförmigen Nitrilkautschuke und eines Teils des Epoxyharzpräpolymers in dem Gewichtsverhältnis von (1-100):100, bevorzugt (5-50):100, mehr bevorzugt (5-30):100, zur Herstellung einer Vormischung und anschließendes Mischen der Vormischung und des verbleibenden Epoxyharzpräpolymers.

## Revendications

1. Composition de résine époxy comprenant les composants mélangés suivants : 100 parties en poids d'une résine époxy ; 30 à 120 parties en poids, de préférence 50 à 90 parties en poids d'un agent de durcissement de type anhydride ; 1 à 45 parties en poids, de préférence 2 à 29 parties en poids, plus de préférence 3 à 25 parties en poids, le plus de préférence 3 à 19 parties en poids d'un caoutchouc nitrile pulvérulent ;
aucun accélérateur de durcissement n'est inclus dans la composition ;
dans laquelle le caoutchouc nitrile pulvérulent est des particules de caoutchouc ayant une structure homogène, un diamètre particulaire moyen de 20 à 500 nm et une teneur en gel de 60 % en poids ou plus.

2. Composition de résine époxy selon la revendication 1, dans laquelle l'agent de durcissement de type anhydride est au moins l'un sélectionné dans le groupe constitué de l'anhydride phtalique, de l'anhydride tétrahydrophtalique, de l'anhydride hexahydrophtalique, de l'anhydride méthyl tétrahydrophtalique, de l'anhydride méthyl hexahydrophtalique, de l'anhydride méthyl nadique, de l'anhydride dodécylsuccinique, de l'anhydride chlorendique, de l'anhydride pyromellitique, du dianhydride de l'acide benzophénone tétracarboxylique, du dianhydride de l'acide méthyl cyclohexène tétracarboxylique, du dianhydride de l'acide diphényl éther tétracarboxylique, de l'anhydride trimellitique, d'un polyanhydride polyazélaïque, de l'anhydride maléique, de l'anhydride 70, de l'anhydride d'huile d'aleurite et de l'anhydride 647 ; de préférence au moins l'un sélectionné dans le groupe constitué de l'anhydride phtalique, de l'anhydride méthyl tétrahydrophtalique, de l'anhydride méthyl hexahydrophtalique, de l'anhydride pyromellitique et de l'anhydride trimellitique.

3. Composition de résine époxy selon la revendication 1, dans laquelle le caoutchouc nitrile pulvérulent présente un diamètre particulaire moyen de 50 à 200 nm, de préférence de 70 à 150 nm.

4. Composition de résine époxy selon la revendication 1, dans laquelle le caoutchouc nitrile pulvérulent présente une teneur en gel de 75% en poids ou plus, de préférence de 85 % en poids ou plus.

5. Composition de résine époxy selon la revendication 1, dans laquelle les caoutchoucs nitrile pulvérulents sont des caoutchoucs nitrile pulvérulents totalement vulcanisés et/ou des caoutchoucs nitrile pulvérulents réticulés.

6. Composition de résine époxy selon l'une quelconque des revendications 1 à 5, dans laquelle la résine époxy est au moins l'une sélectionnée dans le groupe constitué d'une résine époxy de type glycidyl éther, d'une résine époxy de type ester de glycidyle, d'une résine époxy alicyclique et d'une résine époxy oléfinique époxydée.

7. Procédé de préparation de la composition de résine époxy selon l'une quelconque des revendications 1 à 6 qui comprend les étapes de mélange des caoutchoucs nitrile pulvérulents et d'un prépolymère de résine époxy de manière uniforme dans le rapport en poids, et d'ajout d'adjuvants comprenant des agents de durcissement de type anhydride sans ajouter un accélérateur de durcissement, et ensuite de durcissement pour obtenir la composition de résine époxy.

8. Procédé selon la revendication 7, dans lequel les caoutchoucs nitrile pulvérulents et le prépolymère de résine époxy sont mélangés selon l'une des deux manières suivantes : a) un procédé de mélange en une étape comprenant le mélange des caoutchoucs nitrile pulvérulents et du prépolymère de résine époxy directement dans le rapport; b) un procédé de mélange en deux étapes comprenant le prémélange des caoutchoucs nitrile pulvérulents et d'une partie du prépolymère de résine époxy dans le rapport en poids de (1 à 100) : 100, de préférence de (5 à 50) : 100, plus de préférence (5 à 30) : 100 pour préparer un prémélange et ensuite le mélange du prémélange et du prépolymère de résine époxy restant.
